(19)

Europäisches Patentamt

European Patent Office

Office européen des brevets

(11) **EP 4 502 927 A1**

(12) **EUROPEAN PATENT APPLICATION**

(43) Date of publication:
05.02.2025 Bulletin 2025/06

(21) Application number: 23189527.7

(22) Date of filing: 03.08.2023

(51) International Patent Classification (IPC):
G06T 7/00 (2017.01)        G06T 7/30 (2017.01)

(52) Cooperative Patent Classification (CPC):
G06T 7/0002; G06T 7/30; G06T 2207/30024

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(71) Applicant: Xyall B.V.
5633 AJ Eindhoven (NL)

(72) Inventors:
• VISSER, Sander Kornelis
  5633 AA Eindhoven (NL)
• KWANT, Ruben Jan
  5633 AA Eindhoven (NL)
• WIMBERGER-FRIEDL, Reinhold
  5633 AJ Eindhoven (NL)
• VAN WIJNGAARDEN, Hans
  5211 SH  s-Hertogenbosch (NL)

(74) Representative: DeltaPatents B.V.
Fellenoord 370
5611 ZL Eindhoven (NL)

(54) **DETERMINATION OF IMAGE REGISTRATION QUALITY IN AN AUTOMATED TISSUE DISSECTION PROCESS**

(57)     In one aspect, the invention relates to a method of quality control in an image registration process, the result of which process is used in an automated dissection process in which tissue is dissected from a dissection slide, on which a tissue section cut from a tissue sample is disposed. The method (10) comprises steps of:
• obtaining (11) a first image of a reference slide containing a reference sample cut from the same tissue sample;
• obtaining (12) a second image of the dissection slide;
• registering (20) the first image onto the second image, whereby a transformation matrix is calculated as part of the image registration process, which results in a best fit between the first image and the second image;
• calculating (30) a first metric of quality for the image registration process, based on a degree of overlap between the first image and the second image;
• calculating (40) a second metric of quality for the image registration process, based on a parameter indicative of the skewness and non-symmetric scaling of the transformation matrix;
• comparing (50) each value calculated for the first and the second quality metric against a corresponding threshold, to determine whether each quality metric is satisfied; and
• determining that the image registration quality is unsatisfactory if either the first or the second quality metric fails to be satisfied and reporting (60) the determination to a user.

Fig. 2

**Description**

**FIELD OF THE INVENTION**

The invention relates to digital pathology and in particular to a method and system for quality control in an automated dissection process, to determine whether reliable automated dissection may be achieved.

**BACKGROUND ART**

For the purpose of molecular testing in oncology, parts of tissue sections are dissected from a glass slide. In general, tissue is dissected from several slides for a single case to have sufficient material for a molecular test. There is an increasing desire for automation of the dissection process, which involves the application of digital pathology techniques. A region of interest (ROI) where the tissue is to be collected from may be indicated by a pathologist on a reference image that is captured for a specific tissue section. The pathologist draws a line identifying the boundary of the ROI, which is typically referred to as an annotation. A dissection image is also captured for each slide containing a further tissue section from the same sample that is to be dissected. The reference image is mapped onto each dissection image in an image registration process, whereby the annotation of the ROI boundary is also transferred to the dissection image. After image registration, a dissection tool is controlled, based on coordinates of the transferred annotation, to mechanically remove biological material from teach dissection slide, within the annotated boundary.

An example of a method for determining regions for tissue dissection in a series of pathology slides is disclosed in WO 2021/001564. Annotations are obtained for at least first and second reference images in the series, which are separated by a number of intermediate images. Annotations are then generated for the intermediate images between the reference images on the basis of bidirectional image registration and the subsequent transfer of both annotations to each intermediate image, which annotations are then combined to obtain a combined annotation for each intermediate image. The method involves determining a first set of registration parameters for the image registration of the first reference image onto the intermediate image and determining a second set of registration parameters for the image registration of the second image onto the intermediate image. The method may further comprise determining a quality of fit of the annotation in the intermediate image, and it the quality of fit does not satisfy a quality of fit criterion, alerting a user to provide a third annotation in a third image from the series of intermediate images between the first and the second image.

As will be understood, it is important for the quality of an achieved dissection result that tissue of interest is removed from a dissection slide. The overall dissection result can be affected by several parameters associated with the apparatus used in the automated dissection process. For example, misalignment between an imaging module and a dissection tool and the accuracy of the movements of the dissection tool can affect the achieved quality. But even if there is no misalignment and the accuracy of the movements is precise, the achieved dissection result can be unsatisfactory if the transfer of the annotation to the dissection slide is inaccurate due to insufficient quality of the image registration process.

There is still room for improvement.

**SUMMARY OF THE INVENTION**

In a first aspect, the invention relates to a method of quality control in an image registration process, the result of which process is used in an automated dissection process in which tissue is dissected from a dissection slide, on which a tissue section cut from a tissue sample is disposed. The method comprises steps of:

- obtaining a first image of a reference slide containing a reference sample cut from the same tissue sample;
- obtaining a second image of the dissection slide;
- registering the first image onto the second image, whereby a transformation matrix is calculated as part of the image registration process, which results in a best fit between the first image and the second image;
- calculating a first metric of quality for the image registration process, based on a degree of overlap between the first image and the second image;
- calculating a second metric of quality for the image registration process, based on a parameter indicative of the skewness and non-symmetric scaling of the transformation matrix;
- comparing each value calculated for the first and the second quality metric against a corresponding threshold, to determine whether each quality metric is satisfied;
- determining that the image registration quality is unsatisfactory if either the first or the second quality metric fails to be satisfied and reporting the determination to a user.

The step of reporting may further comprise reporting the values calculated for the first and second quality metrics. In the event of an unsatisfactory determination for the image registration quality for the second image of a particular dissection slide, the dissection slide in question may be rejected or the report may indicate that the user should take a corrective action, such as sending the dissection image to a pathologist for manual annotation.

In the event of a satisfactory determination, the dissection slide may proceed to automated dissection by a dissection apparatus having a dissection tool for removing material from the slide. The method suitably comprises further steps of identifying a region of interest to be dissected, based on the reference slide, annotating a boundary of the identified ROI on the reference image (first image) and transferring the annotation to the dissection image (second image). The coordinates of the transferred annotation are communicated to a controller of the dissection apparatus, which controls the movements of the tool to remove material from within the identified ROI.

Image registration of the reference image onto the images of a series of dissection slides forms the basis for the automated transfer of the annotation of the ROI for dissection. In the method of the invention, the quality of the image registration is evaluated based on at least two different metrics, which significantly reduces the likelihood that a transferred annotation is in fact unreliable, and increases the likelihood that the quality of the dissection result will be satisfactory.

In some embodiments, the step of evaluating the image registration quality for each of a series of dissection slides is performed prior to annotation of the ROI boundary on the reference slide. This removes the need to transfer an annotation onto dissection images which do not satisfy the quality metrics. In other embodiments, the quality of the image registration process is evaluated and reported during or after annotation of the reference image.

In the method of the invention, the first quality metric for the image registration process is the degree of overlap between the reference image and the dissection image. Calculating the Intersection over Union (IoU) is a preferred technique, whereby the IoU represents the ratio of the overlap area of tissue present in the images and the combined area of tissue in both images. Tissue area is determined via the number of pixels which are identified as tissue pixels, based on an analysis of intensity. In an example where the images are captured using a transmission-based optical arrangement, tissue pixels are relatively bright and may be identified as pixels which exceed a threshold, which is selected based on a background level of intensity. It is also possible to capture images using a bright-field arrangement based on reflected light, in which case tissue pixels are darker than the background.

After the step of image registration, the method suitably comprises further steps of:

- segmenting the tissue present in the reference image and in the dissection image, to identify tissue pixels; and
- determining how many tissue pixels overlap and how many tissue pixels are present in both images combined.

The IoU is then calculated as the number of overlapping tissue pixels $N_{overlap}$ divided by the total number of tissue pixels $N_{total}$ in both images combined.

The result of the IoU calculation scales inversely proportional to a surface-to-circumference area of objects in the images. In other words, any misalignment between the images of "small" tissue objects leads to a lower IoU value compared with the IoU value that would be calculated for the images of "large" tissue objects having the same degree of misalignment. This creates a bias which may be compensated by scaling the applied IoU-threshold by the tissue area in the images according to a polynomial function through two empirically chosen points.

The method may therefore comprise a further step of setting the IoU-threshold based on an area-dependent polynomial function, which is dependent on an area of tissue, whereby the tissue area is obtained from the number of tissue pixels identified in the reference image during the step of segmenting the reference image.

In a preferred embodiment, an upper and a lower bound for the IoU-threshold are defined, for example 0.85 and 0.5. The method may then comprise setting the IoU threshold at a value between the upper and lower bound according to the area-dependent polynomial function.

The second quality metric for the image registration process is based on the deformation of a dissection image that is required to achieve the best fit registration with the reference image. The image registration process involves the application of a registration algorithm. In one example, a feature-based registration algorithm is applied, which identifies distinctive features in the images, such as corners or edges. The identified features are matched, to perform image alignment, whereby the transformation parameters are calculated based on the location of the matched features. In other examples, image registration may be performed using an active contour model, using shape context or using the level set method.

In effect, the registration results in a transformation matrix which consists of many elements, including x-y-shift, rotation, affine deformation, non-affine deformation, shear, etc. Based on the process of tissue sectioning and placement on slides, there are expectations on realistic deformations and mismatches between slides. The transformation matrix properties should reflect expected ranges. Otherwise, it is likely that the registration process did not result in a good match, but was 'deceived' by features and resulted in a local minimum.

The registration algorithm returns a transformation matrix of the form:

$$\begin{pmatrix} a & b & e \\ c & d & f \end{pmatrix}$$

where e and *f* define the translation and $\begin{pmatrix} a & b \\ c & d \end{pmatrix}$ is a combination of rotation, scaling, and skewness.

In the method of the invention, the transformation matrix is decomposed into a 1st matrix representing rotation and a 2nd matrix representing skewness and scaling:

$$\begin{pmatrix} a & b \\ c & d \end{pmatrix} = R(\theta) \cdot \begin{pmatrix} \alpha x & Sx \\ Sy & \alpha y \end{pmatrix}$$

where $R(\Theta)$ denotes the rotation matrix with rotation $\Theta$ and

and $\alpha_x$ and $\alpha_y$ are the scaling in x and y directions, and $S_x$ and $S_y$ define the skewness in the 2nd matrix $\begin{pmatrix} \alpha_x & S_x \\ S_y & \alpha_y \end{pmatrix}$ .

The inventors have found that the condition number of the 2nd matrix can be used for the identification of skewness and for the identification of non-symmetrical scaling between x and y, by applying an empirically evaluated threshold.

The step of calculating the second quality metric therefore comprises calculating the condition number of the 2nd

matrix $\begin{pmatrix} \alpha_x & S_x \\ S_y & \alpha_y \end{pmatrix}$ , which represents a "score" for skewness and non-symmetrical scaling. In a preferred embodiment, a maximum threshold of 1.12 is set for the condition number. If the calculated condition number exceeds 1.12, the image registration quality is determined to be unsatisfactory.

In a further development, the method of the invention comprises a further step of calculating a third metric for the quality for the image registration process, whereby the third metric is a symmetric scaling measure associated with the 2nd matrix.

When the calculated condition number for the 2nd matrix is within the defined threshold, it can be assumed that the skewness is minimal and the scaling between x and y is near identical. Therefore:

$$\begin{pmatrix} a & b \\ c & d \end{pmatrix} \approx R(\theta) \cdot \begin{pmatrix} \alpha & 0 \\ 0 & \alpha \end{pmatrix}$$

Under these assumptions, the 2- norm of the 2nd matrix equals $\alpha$. When this value is too large or too small, the symmetric scaling metric is not satisfied.

The step of a calculating the third quality metric thus comprises calculating the 2-norm of the 2nd matrix, whereby an upper and a lower bound are set for the calculated value. In a preferred embodiment, the lower bound is set at 0.9 and the upper bound is set at 1.1.

In a still further development, the method of the invention optionally comprises a further step of calculating a fourth metric of quality for the image registration process, being a quantitative uncertainty parameter that provides a measure for the spatial accuracy of the image alignment. This represents the potential local inaccuracy of a transferred annotation based on image registration.

The calculated value for the uncertainty parameter can be reported to a user as part of a quality report for the image registration process and/or as part of a quality report for the achieved dissection result that is generated after automated dissection has been performed.

Preferably, the calculated value for the uncertainty parameter is reported relative to an indicator X that is derived from a typical accuracy of the dissection tool used in the dissection apparatus, like for instance X = 0.1 mm. The accuracy of the tool thus serves as the threshold against which the calculated value is compared. If the calculated value is greater than X, a warning is issued in the generated quality report.

In an embodiment, the uncertainty parameter is calculated based on the first quality metric. The method comprises a further step of estimating an average diameter of the tissue object detected during segmentation of the dissection image. A value for the uncertainty parameter is obtained by multiplying the average diameter by the IoU.

In a further embodiment, when the registration algorithm is feature-based, the uncertainty parameter is calculated based on a comparison of the transformation matrix $A_{total}$, which is the final result of the image registration process and of individual transformation matrices $A_{match}$ which are calculated when mapping a detected feature in the reference image onto a corresponding feature detected in the dissection image. The distance between a point that is transformed using the two matrices provides a locally defined metric for the image registration quality. The method may then comprise further steps of:

- identifying a key-point, x, of of each feature in the reference image that has been detected and matched to a corresponding feature in the dissection image;
- transforming each identified key point x using $A_{total}$ and using the individual transformation matrix $A_{match}$ associated with that feature and
- determining a local spatial difference D between the two transformations, based on:

$$D = |(A_{total} - A_{match})x|.$$

In one example, the key-point x of a feature is identified as a centre point of the feature. Any other suitable point of a feature may be selected.

In an embodiment of the method according to the further development, the quantitative uncertainty parameter is calculated as an average of the determined spatial differences. The average may be calculated for all points in the image as a whole. In a further example, the method comprises identifying tissue objects in the dissection and averaging the determined spatial differences D for a tissue object.

In a still further example, the determined spatial differences D obtained for each feature location are interpolated and plotted as a heat map.

In a further embodiment of the method, in which the identified ROI boundary has been annotated on the reference image, the method further comprises:

- mapping each determined spatial difference D onto the dissection image; and
- relating each difference to points of the ROI annotation, to calculate a local value for the uncertainty parameter for all points of the annotation.

If any of the calculated local values exceed the threshold X, the report includes a warning.

In a second aspect, the invention relates to a system for assessing and reporting the quality of image registration between a reference slide image and a series of dissection slide images. The system comprises an imaging module, having an image sensor such as a camera and a processor programmed with an image registration algorithm and image processing software. The system further comprises a display for showing a quality control report. The processor is further programmed with instructions which cause the system to execute the method steps of the invention. Preferably, the system is further equipped with a user input interface which allows a user (pathologist) to annotate image data.

In a preferred example, the system forms part of a dissection apparatus. The apparatus is further equipped with a moveable dissection tool and with a controller for controlling the tool movements based on coordinates received from the imaging module.

The dissection tool may be equipped with a scraping blade, such as disclosed in WO 2022/063695, or with a milling tip, such as disclosed in US 10876933. In other examples, the apparatus may perform laser-based microdissection.

In a preferred example of a dissection apparatus comprising a system according to the invention, the apparatus is further configured to assess the achieved dissection result. The processor is additionally programmed with instructions which cause the imaging module to capture a post-dissection image of a dissection slide and compare it with the pre-dissection image onto which the ROI annotation has been registered. Further, an image processing algorithm is applied which executes steps of:

- detecting an achieved dissection boundary, based on a pixelwise comparison of the pre-dissection and post-dissection images, to determine a change in intensity;
- comparing the detected dissection boundary with the registered annotated boundary to determine at least one indicator that is representative of the achieved quality of the dissection result; and
- generating a quality report that includes the at least one determined indicator of quality.

Examples of quality indicators for the achieved dissection result are a mean deviation between the detected boundary and the annotated boundary, and a percentage of tissue that has been dissected from within the annotated boundary. A quality score may be assigned to each quality indicator that is calculated

The quality of the image registration process also has an impact on the achieved dissection result.

In a further development of the method of the invention, a quality score is assigned to the value which has been calculated for each quality metric for the image registration process.

An overall quality score for the image registration process may thus be calculated based on:

$$Q_{overall} = Q_1 * Q_2 * Q_3 * Q_4$$

whereby $Q_1$ - $Q_4$ represent the quality score associated with the first - fourth calculated quality metric respectively.

Suitably, a score of 0 is assigned to any calculated value which fails to satisfy its corresponding threshold. In some examples, a value of 1 is assigned to a calculated value that satisfies is threshold, such that the overall rating $Q_{overall}$ is either 0 for unsatisfactory or 1 for satisfactory. In other examples, a score is assigned to one or more of the calculated values, such that the quality of a "satisfactory" image registration may be quantified. The score which is assigned to a particular calculated value may be determined based on a normalized deviation from a target value within an acceptable range for the applicable threshold. A score of 0 is assigned when the calculated value lies outside of the acceptable range.

As will be understood, in embodiments where only the first and second quality metric are calculated, the overall rating is based on $Q_1$ and $Q_2$.

In an embodiment of the dissection apparatus, the apparatus is configured to calculate a quality rating for the achieved dissection result based on the overall score $Q_{overall}$ determined for the image registration process. Suitably, the quality rating is further determined using the score assigned to each indicator of quality that has been calculated for the achieved dissection result based on comparison of the pre- and post-dissection images.

The method and system of the invention thus enable several enhancements which drastically reduce the risk that material collected from a dissection slide may be unreliable for molecular testing. Other advantages will be explained in the following detailed description, with reference to the accompanying drawings.

## BRIEF DESCRIPTION OF THE DRAWINGS

The invention will now be further elucidated with reference to the embodiments described hereinafter. In the drawings,

Fig. 1   illustrates a series of pathology slides in which the tissue in one slide is stained by H&E and is a reference slide, and the remaining slides are dissection slides not stained by H&E;

Fig. 2   shows an embodiment of a method according to the invention for determining whether the quality of image registration process, in which an image of the reference slide is mapped onto the image of a dissection slide, is unsatisfactory for enabling a reliable automated dissection result to be achieved;

Fig. 3a   shows an example of a first image of a tissue slide containing a reference tissue section cut from a sample;

Fig. 3b   shows an example of a second image of a tissue slide, containing a tissue section cut from the same sample;

Fig. 3c   shows an overlap of the first and second images in an image registration process;

Fig. 4   shows sub-steps associated with the step of image registration and with the calculation of a fourth metric quality in a further embodiment of the method of the invention;

Fig. 5   schematically illustrates a system configured to implement the method of the invention;

Fig. 6   schematically illustrates an example of a dissection apparatus equipped with a system for implementing the method of the invention.

It should be noted that items which have the same reference numbers in different figures, have the same structural features and the same functions, or are the same signals. Where the function and/or structure of such an item has been explained, there is no necessity for repeated explanation thereof in the detailed description.

## DETAILED DESCRIPTION OF EMBODIMENTS

Pathology diagnostic investigation of biological material, such as tissue and cells, forms the basis for many treatment decisions, particularly in oncology. For example, genomic-based tests are performed in order to inform therapy selection for individual patients diagnosed with cancer. The biological material/tissue may be obtained from a biopsy or surgery. Typical tissue processing steps comprise, for example, formalin fixation and paraffin embedding. Such formalin-fixed, paraffin-embedded (FFPE) biological material is then cut into thin sections which are fixed onto glass slides. Other methods of obtaining and preparing tissue samples are known. For molecular testing, samples are selected from such sections to meet the test requirements. A pathologist identifies regions of interest (ROI) and the identified ROI of each tissue slide is then dissected to obtain sufficient material for molecular testing.

In an automated dissection process, the ROI to be dissected from a series of tissue slides prepared from the same sample is indicted by a pathologist on a reference image of a reference slide via a so-called annotation, which is a drawn line indicating a boundary of the identified ROI. Typically, the reference slide is an H&E-stained slide of a reference sample from the same case. The remaining slides in the series may be paraffin embedded unstained slides or may be deparaffinized and optionally stained with a nuclear fast red (NFR) or haematoxylin stain that does not interfere with amplification and detection protocols for identifying tissue material. These slides will be referred to as dissection slides.

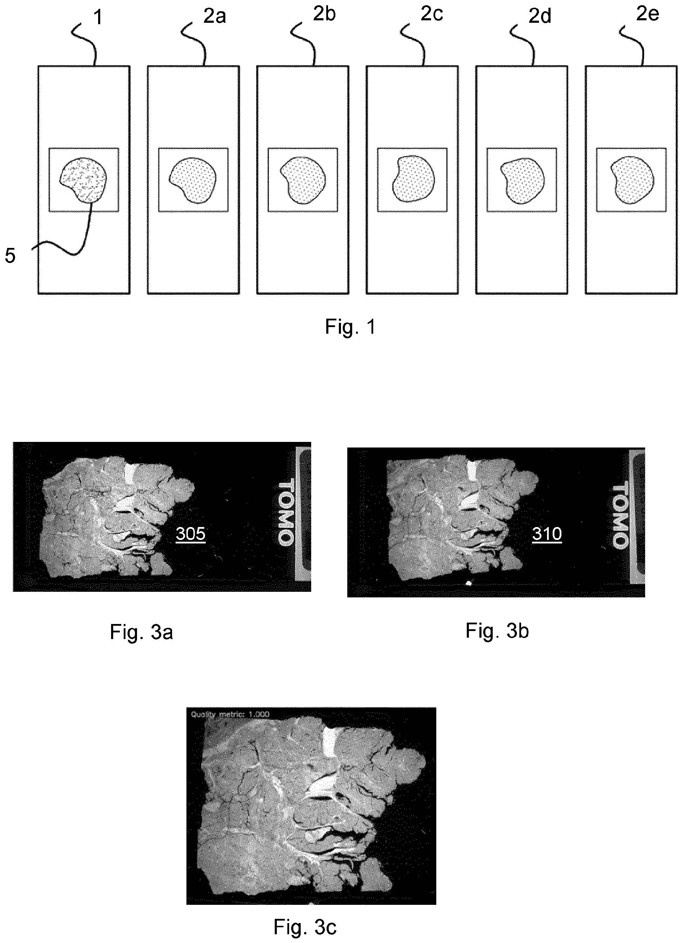

Fig. 1 shows a series of tissue slides in which the tissue 5 in the reference slide 1 is stained by H&E and the remaining slides 2a - 2e are dissection slides not stained by H&E.

Suitably, the H&E reference slide 1 is scanned by a high-resolution scanner, to allow tumour cells to be identified, and the H&E image - reference image - is made available to a pathologist for ROI selection and annotation of the ROI boundary or boundaries. Each dissection slide 2a - 2e is then scanned to obtain a dissection image.

Registration of the reference image to each dissection image is then performed and the reference slide annotation is transferred to each dissection image. Automated dissection may then be performed by an apparatus having a dissection tool, the movements of which are controlled in order to remove material from the slide based on the coordinates of the transferred annotation.

Image registration of the reference image onto the images of the dissection slides forms the basis for the automated transfer of the annotation of the region of interest for dissection. The quality of the image registration process is therefore an important factor in achieving a reliable dissection result for molecular testing.

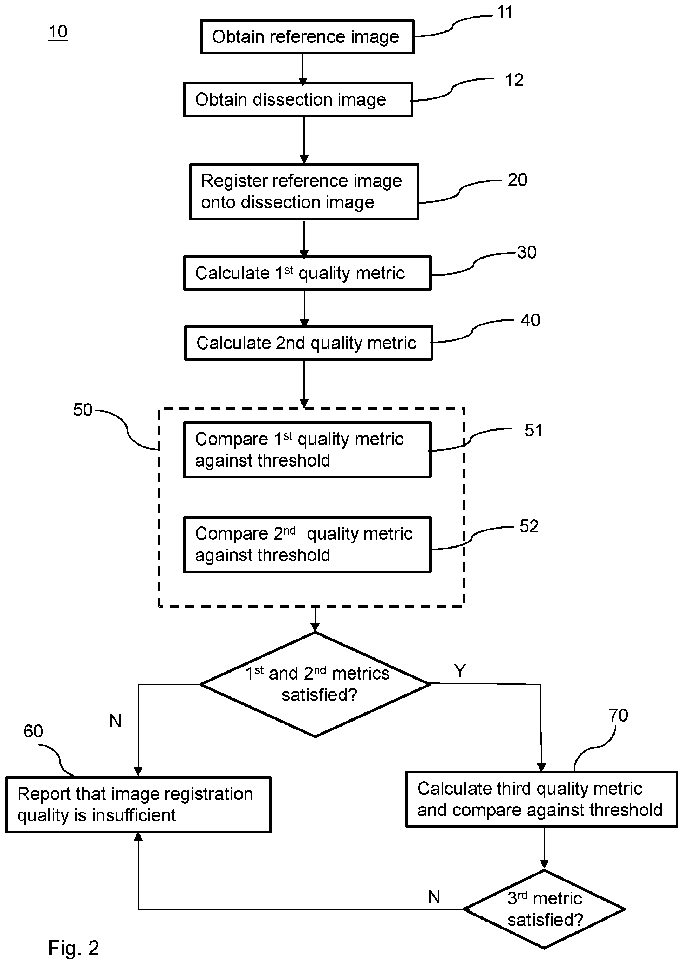

In a first aspect, the invention relates to a method of quality control in an image registration process that is used in an automated dissection process, to determine if the quality of the image registration is sufficient for enabling a reliable and accurate dissection result to be achieved. Steps of a preferred embodiment of the method 10 are shown in Figure 2.

In a first step 11, a first image of a reference slide containing a tissue section from a sample is obtained. The first image i.e. reference image may be captured by a system that is configured to implement the method of the invention, or the reference image may be received or downloaded from an external source. In a next step 12, a second image of a dissection slide having a tissue section from the same sample is captured or received, to obtain a dissection image. Suitably, a dissection image is obtained for each dissection slide containing a tissue section from the same sample.

In a subsequent step 20, the reference image is registered onto each dissection image in an image registration process, whereby a transformation matrix is calculated which results in a best fit between the reference image and each dissection image. In one example, a feature-based image registration algorithm such as described in US89229294 is applied.

In the method of the invention, the quality of the image registration process is assessed based on at least two different metrics of quality.

A first quality metric for the image registration process is calculated in a step 30, based on a degree of overlap between the reference image and each dissection image. A preferred example of a measure for the degree of overlap is Intersection over Union (IoU). The IoU may be calculated via a number of sub-steps.

In a first sub-step, the reference image and each dissection image are segmented to identify tissue pixels. An imaging module comprising an optical arrangement and a light source is used to capture the images of the slides. Tissue pixels exhibit a high intensity and may be identified as pixels which exceed a predefined minimum value of intensity. Suitably, the minimum value is defined based on the optical arrangement used, the type of tissue sample to be dissected and a level of background intensity.

In a second sub-step, the number of overlapping tissue pixels $N_{overlap}$ and the total number of tissue pixels in both images combined $N_{total}$ are determined.

The IoU score is then calculated as $N_{overlap}$ divided by $N_{total}$.

The second quality metric for the image registration process is calculated in a next step 40. The second metric is a parameter indictive of both the skewness and scaling of the transformation matrix which results from the image registration.

The image registration returns a transformation matrix of the form:

$$\begin{pmatrix} a & b & e \\ c & d & f \end{pmatrix}$$

where e and $f$ define the translation and $\begin{pmatrix} a & b \\ c & d \end{pmatrix}$ is a combination of rotation, scaling, and skewness.

The transformation matrix may be decomposed as follows:

$$\begin{pmatrix} a & b \\ c & d \end{pmatrix} = R(\theta) \cdot \begin{pmatrix} \alpha x & Sx \\ Sy & \alpha y \end{pmatrix}$$

where $R(\Theta)$ denotes the rotation matrix with rotation $\Theta$ and $\begin{pmatrix} \alpha_x & S_x \\ S_y & \alpha_y \end{pmatrix}$ denotes a skewness and scaling matrix in which $\alpha_x$ and $\alpha_y$ are the scaling in x and y directions, and $S_x$ and $S_y$ define the skewness.

Note that there is no unique solution here, as there are 5 unknowns with 4 constraints. Knowing that the condition number of the rotation matrix is always unity and the condition number of the product of two matrices equals the product of the individual condition numbers, one can discard the rotation matrix. This leaves us with $\begin{pmatrix} \alpha_x & S_x \\ S_y & \alpha_y \end{pmatrix}$.

There are two options:

(i) Both skewness values are (almost) 0. In this case the condition number equals $\frac{\alpha x}{\alpha y}$.

(ii) At least one of the skewness values is non-negligible. This has a significant impact on the condition number.

Therefore, the condition number, using an empirically evaluated threshold, can be used for the identification of skewness and for the identification of non-symmetrical scaling between x and y.

The step of calculating 40 therefore suitably comprises decomposing the transformation matrix into a rotation matrix and a skewness and scaling matrix and calculating the condition number of the skewness and scaling matrix.

In a subsequent step of comparing 50, each value calculated in steps 30 and 40 is compared against a corresponding threshold, to determine whether the quality of the image registration process is unsatisfactory for enabling a reliable dissection result to be achieved.

In a sub-step 51, the IoU score is compared against an IoU threshold. The threshold for the IoU of the reference image and the dissection image may be defined by an area-dependent polynomial. Based on the way in which the IoU is calculated, it scales inversely proportional to the surface-to-circumference ratio of objects in the images. To compensate for this bias, the IoU-threshold may be scaled by the tissue area in the reference image according to a polynomial function through two empirically chosen points. In the depicted embodiment, a lower bound and an upper bound are defined for the IoU-threshold, whereby the threshold is set at a value between the upper and lower bound based on the number of tissue pixels identified for the reference image in the sub-step of segmenting the reference image.

In one example, the lower bound for the IoU threshold is defined as 0.5 and the upper bound is defined as 0.85. The area-dependent polynomial which is used to set the threshold is suitably derived from experience and previous calculations. If the calculated value for the IoU falls below the set threshold, the image registration quality is determined to be unsatisfactory.

When the value calculated for the IoU exceeds the IoU threshold, the degree of overlap is satisfactory, but this is insufficient to indicate that the quality of the image registration process is sufficient. In a sub-step 52, the value calculated for the condition number of the skewness and scaling matrix is compared against a predefined threshold.

The threshold for the condition number is suitably an empirically derived, hardcoded value, which in a preferred example is set at 1.12. If the calculated value for the condition number exceeds the threshold, the quality of the image registration process is determined to be unsatisfactory.

If either the first or the second quality metric fails to be satisfied, the method comprises a step 60 of reporting the determination to a user. The report may also include the values calculated, possibly together with a warning to check the associated dissection image carefully before the slide in question is allowed to proceed to automated dissection and/or to take corrective action such as sending the dissection image to a pathologist for separate annotation.

In the event that the calculated values for the first and second quality metrics satisfy the corresponding metrics, there may still be a risk that the image registration process is of insufficient quality. The condition number calculated for the skewness and scaling matrix may indicate that there is negligible non-symmetric scaling, but the overall scaling between the reference image and the dissection image could still be unacceptably large or small.

In a preferred embodiment, the method thus comprises a further step 70 in which a third metric of quality is calculated and compared with a threshold, whereby the third metric is a parameter indicative of symmetric scaling.

When the step of comparing 52 returns the result that the condition number calculated for the decomposed skewness and non-symmetric scaling matrix is lower than the predefined threshold, it can be assumed skewness is minimal and the scaling between x and y is near identical. Therefore:

$$\begin{pmatrix} a & b \\ c & d \end{pmatrix} \approx R(\theta).\begin{pmatrix} \alpha & 0 \\ 0 & \alpha \end{pmatrix}$$

where $\alpha$ represents the scaling when the scaling in x and y are the same.

Under these assumptions, the 2- norm of the skewness and scaling matrix equals $\alpha$. The step 70 therefore comprises calculating the 2-norm of this matrix as a third metric of quality. When the calculated value exceeds an upper limit or falls below a lower limit, the metric is not satisfied and a user is alerted as outlined above. In one example, the lower limit is set at 0.9 and the upper limit is set at 1.1. The risk that dissection of the slide in question will not achieve a satisfactory dissection result is thus further reduced.

In embodiments of the method where the third quality metric is calculated and compared with threshold limits, the calculation and comparison can also be done together with the calculation and comparison of the 1st and 2nd metrics.

Example

An example of the registration of first and second slide images is shown in Figures 3a - 3c, whereby Fig. 3a depicts the first image 305 of first slide containing a tissue section - being the reference image - and Fig. 3b depicts a second image 310 of a second slide containing a different tissue section from the same tissue sample. The first image is mapped onto the second image in a registration process, whereby the result of the overlap is shown in Fig. 3c.

After registration, the IoU score is calculated. In the depicted example, the IoU score is 0.967. The tissue area in the reference image is calculated based on the identified tissue pixels, whereby the IoU-threshold is set to the maximum value of 0.85 in the given example, based on the area-dependent polynomial. The IoU score exceeds the threshold and the first quality metric is satisfied.

The transformation matrix that is returned by the registration algorithm applied in the registration process for the depicted images is:

$$\begin{pmatrix} a & b & e \\ c & d & f \end{pmatrix} = \begin{pmatrix} 0.9940 & 0.0820 & -0.0003 \\ -0.0801 & 0.9946 & -0.0011 \end{pmatrix}.$$

One of the possible ways to decompose the transformation matrix into rotation, scaling and skewness is:

$$R(\Theta) \cdot \begin{pmatrix} \alpha_x & S_x \\ S_y & \alpha_y \end{pmatrix} = R(0.0823) \cdot \begin{pmatrix} 0.9974 & 0.0020 \\ 0 & 0.9978 \end{pmatrix}.$$

Both scaling factors $\alpha_x$ and $\alpha_y$ are close to unity and skewness close to zero.

The condition number of the $\begin{pmatrix} \alpha_x & S_x \\ S_y & \alpha_y \end{pmatrix}$ matrix is calculated, which results in a value of 1.002. Since this is smaller than the threshold of 1.12, the second quality metric is also satisfied.

A further check on the quality of the image registration is performed by calculating the 2-norm of the decomposed skewness and scaling matrix, to determine the overall scaling (symmetric scaling). The value calculated is 0.998, which lies within the thresholds of 0.9 and 1.1, and this metric of quality is also satisfied.

Consequently, all scores are within defined ranges for a successful image registration and it can be concluded that an annotation on the reference image may be reliably transferred to the second image. Suitably, the successful determination is reported to a user on a user interface. The results of the values calculated for each quality metric may also be included in the report.

In a further development, the method comprises a step of calculating a fourth metric of quality for the image registration process. The fourth metric is a quantitative uncertainty parameter, which is indicative of the spatial accuracy of the image alignment in the registration process. This parameter provides a quantitative indicator for the impact of the registration quality on the accuracy of a transferred annotation, which is relevant for the accuracy of the achieved dissection result.

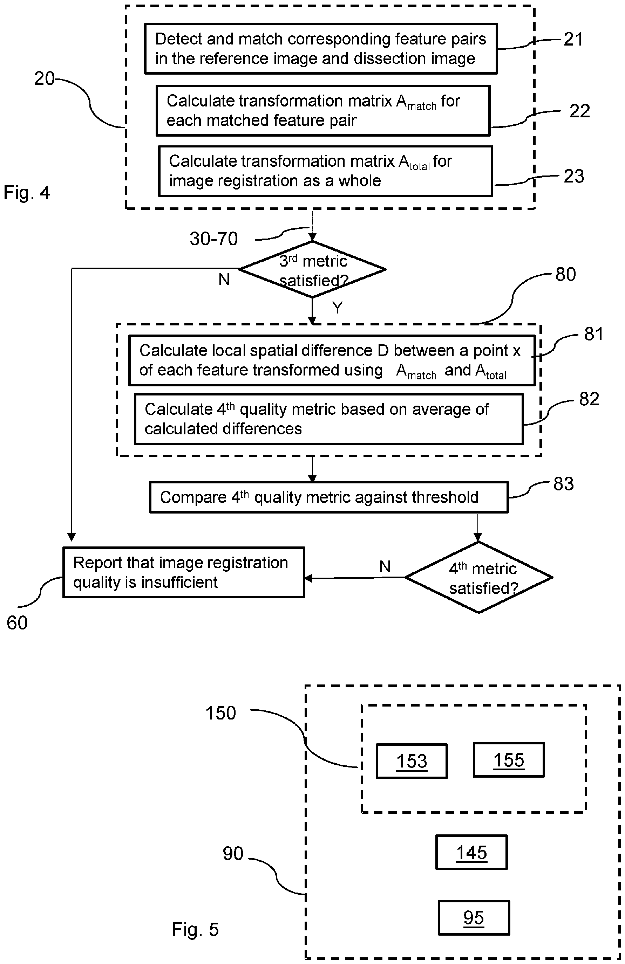

Fig. 4 shows a flowchart of certain steps in an example of a method according to the further development, whereby sub-steps of image registration process 20 are depicted and whereby the subsequent method steps 30-70 of calculating the 1st, 2nd and 3rd quality metrics and comparing them against their respective thresholds have been omitted for simplicity. The step 80 of calculating the fourth metric of quality may be performed after the step 70 of calculating and comparing the third quality metric.

In a preferred embodiment, the image registration process applied in method step 20 is an automatic feature-based image registration using, for example, Scale-Invariant Feature Transform (SIFT). Features in the reference image and corresponding features in the dissection image are detected and matched in a sub-step 21. For each corresponding feature pair, a transformation matrix is calculated in a sub-step 22.

Let us define the transformation matrix calculated for each matched feature pair as:

$$A_{match} = \begin{pmatrix} a_{match} & b_{match} & e_{match} \\ c_{match} & d_{match} & f_{match} \end{pmatrix}$$

As outlined earlier, the step of registering the reference image onto the dissection image comprises a sub-step 23 of calculating a transformation matrix for the image registration as a whole. Let us define this transformation matrix as:

$$A_{total} = \begin{pmatrix} a_{total} & b_{total} & e_{total} \\ c_{total} & d_{total} & f_{total} \end{pmatrix}$$

By comparing the transformation matrix of a feature pair $A_{match}$ with the transformation matrix used for the image registration $A_{total}$, a local spatial difference, i.e. distance, between the two transformations can be calculated for a point of a matched feature pair. This provides a locally defined metric for the image registration quality.

$$x = \begin{pmatrix} x \\ y \\ 1 \end{pmatrix}$$

The local spatial difference is calculated in a sub-step 81. For every key-point x of a feature, whereby , the distance between its own defined transformation and the overall transformation may be obtained as $D = |(A_{total} - A_{match}) x|$.

In one example, the key-point of a matched feature pair is defined as a geometric centrepoint of a feature as detected in the reference image, which may be determined in the sub-step 21 of detecting and matching features.

The difference D is determined for the identified key-point of each detected feature and in a sub-step 82, the uncertainty parameter (4th quality metric) is calculated based on an average of the determined values. In one example, the determined difference is averaged for all key-points of the whole image.

In an alternative example, the method comprises a further step of identifying tissue objects in the reference image and/or dissection image, and the step of averaging comprises averaging the differences D which are determined for the key-point of features which lie within a tissue object. An advantage of averaging the values calculated for features in tissue objects, rather than for all features in the image as a whole, is that the position of tissue objects can change relative to one another in a series of dissection slide images. As a result, the average over the total image may not be representative for individual tissue objects. A further advantage is that matched features which do not comprise tissue will most probably lie outside of the ROI to be dissected. A greater degree of deviation (uncertainty) in the local spatial difference is then permissible as compared with the deviation that is permissible within the ROI. The likelihood of false negatives is thus reduced.

The degree of deviation that is permissible depends on the typical accuracy of a dissection tool and associated apparatus that is used in the subsequent automated dissection process. In the case where the typical accuracy of the tool is X, e.g. 0.1 mm, the value X suitably provides a threshold for the uncertainty associated with the transfer of the ROI annotation.

If the value calculated for the uncertainty parameter is greater than X, it is determined that the quality of the image registration is insufficient and this is reported to the user. Preferably, the value calculated is also included in the report, also when this value is acceptable.

In a second aspect, the invention relates to a quality control system for an image registration process used in an automated dissection process. An example of a system configured to implement the method of the invention is shown schematically in Fig 5. The system 90 comprises an imaging module 150 for capturing images of a series of tissue slides. The module 150 has an image sensor 155 and a processor 153 which is programmed with an image registration algorithm, image processing software and with instructions which cause the system to execute the steps of the method of the invention. The system further comprises a display 145 for reporting the results of the quality control of the image registration process. The system may additionally comprise a user input interface 95 which allows a user (pathologist) to annotate image data.

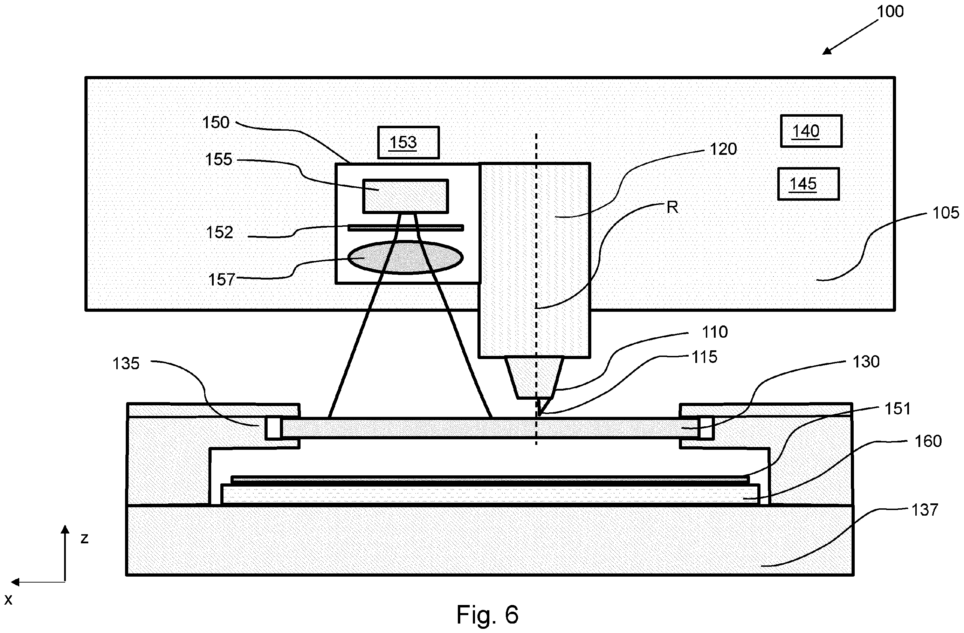

In a further aspect, the system for quality control is integrated in a dissection apparatus. An example of such a dissection apparatus is shown schematically in Figure 6. The apparatus 100 comprises a dissection tool 110 attached to a robotic arm 120, which is mounted to a housing 105 of the apparatus. The robotic arm 120 comprises a series of actuators for performing the necessary movements during dissection, which movements are controlled by a control unit 140 of the apparatus. Suitably, the robotic arm 120 comprises:

- a rotary actuator, for rotating the tool around a vertical axis R that is normal to a platform 137 of the apparatus which supports a tissue slide 130 to be dissected;
- an X-Y stage for translational movements and
- a Z-stage for vertical movements. The Z-stage may comprise a hinge bearing for position control, to ensure that a

EP 4 502 927 A1

constant and precise downward force is applied during dissection.

In the depicted example, the dissection tool 110 comprises a scraping blade 115 for mechanically detaching sample material from the tissue slide 130, which is preferably held fixed in a slide mount 135 to prevent any movement of the slide during dissection. Typically, the slide mount holds a number of tissue slides from the same case, and is automatically loaded onto the support platform 137 of the apparatus. The apparatus is further equipped with a vacuum generator (not shown) which generates an uplifting airflow at the scraping blade, so that scraped material gets suctioned into an internal cavity of the dissection tool 110.

The apparatus further comprises an imaging module/camera module 150 equipped with an image processor 153, which is configured to capture and process an image of each tissue slide 130. The imaging module has an image sensor 155 and a lens 157 and to facilitate image capture, the apparatus is further equipped with a light source 160 and filter elements 151, 152. In the depicted example, images are captured in transmission and the light source 160 is arranged below the glass tissue slide 130. A first filter element 151 is arranged between the light source 160 and the slide 130 and a second filter element 152 is arranged between the image sensor 155 and the lens 157. Suitably, the first and second filter elements are crossed polarizers.

Each tissue slide, including an H&E-stained reference slide, is scanned by the imaging module 150 and the captured digital image of each slide is stored. The obtained reference image is mapped onto each dissection image via the image registration algorithm with which the processor 153 is programmed. The processor is further configured to determine the quality of the image registration process by calculating at least the first and second quality metrics as described above. The third quality metric is calculated if the first and second quality metrics are satisfied. Preferably, the processor 153 is further configured to execute the step of calculating the fourth quality metric. A quality report for the image registration process is generated for each dissection slide, which is shown on a display 145 of the apparatus. The quality report contains an indication of whether the image registration quality is satisfactory or unsatisfactory, and may also include the values calculated for each quality metric. If the image registration quality is unsatisfactory for a particular dissection slide, the report suitably includes a warning and may suggest that the slide is rejected for automated dissection or that a corrective action should be taken.

The quality control report for the image registration process may be displayed before, after or during annotation of the ROI boundary on the reference image. After annotation, the processor is further configured to transfer the annotation to each dissection slide based on the transformation matrix obtained from the image registration process. The coordinates of the transferred annotations are communicated to the control unit 140 and used to guide the movements of the robotic arm 120 and corresponding movements of the dissection tool 110 such that material is removed from the ROI on each tissue slide.

As will be understood, it is important to dissect the region of interest that has been selected by the pathologist with high precision and accuracy. In practice, a number of factors can affect the accuracy of the achieved dissection result. These factors include: the accuracy of the registration of the reference image to the dissection image; alignment of the imaging module and dissection tool; accuracy and precision of the scraping movement and cutting behaviour of the tissue.

For an automated process it is important to determine and assess the quality the achieved dissection result in an automated and reliable fashion, to determine whether the sample material which has been collected can lead to successful molecular testing. In a preferred example of a dissection apparatus comprising a system according to the invention, the apparatus is further configured to assess the achieved dissection result. The processor is additionally programmed with instructions which cause the imaging module to capture a post-dissection image of a dissection slide and compare it with the pre-dissection image onto which the ROI annotation has been registered. Further, an image processing algorithm is applied which executes steps of:

- detecting an achieved dissection boundary, based on a pixelwise comparison of the pre-dissection and post-dissection images, to determine a change in intensity;
- comparing the detected dissection boundary with the registered annotated boundary to determine at least one indicator that is representative of the achieved quality of the dissection result; and
- generating a quality report that includes the at least one determined indicator of quality.

Examples of quality indicators for the achieved dissection result are a mean deviation between the detected boundary and the annotated boundary, and a percentage of tissue that has been dissected from within the annotated boundary.

In addition to an indication of whether a particular quality criterion has been met, e.g. the mean deviation between the detected boundary and the annotated boundary is less than a predefined maximum, a quality score may also be assigned to each determined indicator of quality, such that an overall quality rating for the dissection result achieved for a particular slide is calculated

Suitably, the result of the image registration quality determination is also used as an indicator for the quality of the achieved dissection result.

In a further development of the method of the invention, a quality rating is determined for the image registration process, based on each calculated quality metric. A quality score $Q_1$, $Q_2$ etc. may be assigned to the value calculated for each quality metric, based on the corresponding threshold. In one example, a quality score of either 1 or 0 is assigned to each quality metric, whereby a score of 1 is assigned when the corresponding threshold is satisfied and a score of 0 is assigned when the threshold fails to be satisfied.

An overall rating for the quality of the image registration process may thus be obtained, whereby

$$Q_{overall} = Q_1 * Q_2 * Q_3 * Q_4$$

Thus, for a positive overall score of 1, each of the calculated quality metrics must be satisfied and a negative overall score of 0 is obtained when any of the calculated values fails to satisfy its threshold.

In a further example, a score of 0 is assigned to any of the calculated metrics which fails to satisfy the corresponding threshold and a quantified score is assigned to a "satisfactory" value, based on its proximity to the corresponding threshold. The overall rating may thus quantify the quality of the registration process. For example, a first quality score $Q_1$ may be assigned to the result of the IoU calculation, whereby 1 is assigned for a perfect overlap and a lower score is assigned when the degree of overlap is less. Similarly, a 2nd score $Q_2$ can be assigned for how close the condition number of the skewness and scaling matrix is to unity and a third score $Q_3$ may be assigned based on how close the symmetric scaling parameter is to unity. Furthermore, a fourth quality score $Q_4$ may be assigned to the uncertainty parameter based on the accuracy X of the dissection tool. For example, a score of 1 may be given when the calculated value is significantly smaller than X; a score of 0.8 can be given when the calculated value = X.

A combination of the above two approaches may also be applied, for example: a score of 1 or 0 is assigned for $Q_1$ - $Q_3$, based on whether or not the corresponding threshold is satisfied, and a quantified score of between e.g. 0.8 and 1.0 is assigned for $Q_4$ when the calculated value for the uncertainty parameter is less than the threshold X.

Examples, embodiments or optional features, whether indicated as non-limiting or not, are not to be understood as limiting the invention as claimed. It should be noted that the above-mentioned embodiments illustrate rather than limit the invention, and that those skilled in the art will be able to design many alternative embodiments without departing from the scope of the appended claims.

Reference numerals

| | |
|---|---|
| 1 | reference slide |
| 2a-2b | series of dissection slides |
| 5 | H&E-stained reference sample |
| 10 | method of quality control in image registration process |
| 11 | obtain reference image |
| 12 | obtain dissection image |
| 20 | step of registering reference image onto dissection image |
| 21 | detect and match feature pairs in the images |
| 22 | calculate transformation matrix $A_{match}$ for each matched feature pair |
| 23 | calculate transformation matrix $A_{total}$ for image registration as a whole |
| 30 | step of calculating 1st quality metric for image registration process |
| 40 | step of calculating 2nd quality metric for image registration process |
| 50 | step of comparison |
| 51 | compare 1st quality metric against corresponding threshold |
| 52 | compare 2nd quality metric against corresponding threshold |
| 60 | step of reporting outcome of image registration quality determination |
| 70 | step of calculating 3rd quality metric and comparing against threshold |
| 80 | step of calculating 4th quality metric for image registration process |
| 81 | determine local spatial difference D between a point x transformed using $A_{total}$ and $A_{match}$ |
| 82 | calculate 4th quality metric based on average of the determined differences D |
| 83 | compare 4th quality metric against a corresponding threshold |
| 90 | quality control system |
| 95 | user input interface for image annotation |

| 100 | dissection apparatus |
| 105 | apparatus housing |
| 110 | dissection tool |
| 115 | scraping blade of dissection tool |
| 120 | robotic arm comprising actuators for moving the dissection tool |
| 130 | tissue slide |
| 135 | slide mount |
| 137 | support platform of apparatus |
| 140 | control unit |
| 145 | display |
| 150 | imaging module |
| 151, 152 | contrast enhancing filter elements |
| 153 | image processor |
| 155 | image sensor |
| 157 | lens |
| 160 | light source |
| 305 | reference image of reference |
| 310 | dissection image of dissection slide |

**Claims**

1. A method (10) of quality control in an image registration process, the method comprising steps of:

   • obtaining (11) a first image (305) of a reference slide (1) containing a reference sample (5) cut from a tissue sample;
   • obtaining (12) a second image (310) of a dissection slide (130) containing a tissue slice cut from the same sample;
   • registering (20) the first image onto the second image, whereby a transformation matrix ($A_{total}$) is calculated in a sub-step (23), which results in a best fit between the first image and the second image;
   • calculating (30) a first metric of quality for the image registration process, based on a degree of overlap between the first image and the second image;
   • calculating (40) a second metric of quality for the image registration process, based on a parameter indicative of the skewness and scaling of the transformation matrix;
   • comparing (50) each value calculated for the first and the second quality metric against a corresponding threshold, to determine if each quality metric is satisfied;
   • determining that the image registration quality is unsatisfactory if either the first or the second quality metric fails to be satisfied and reporting (60) the determination to a user.

2. Method of claim 1, wherein the first metric of quality is the Intersection over Union (IoU) of the first (305) and second (310) images and wherein the method further comprises sub-steps of:

   • segmenting the first and second images to identify tissue pixels in each image;
   • calculating the number of overlapping tissue pixels $N_{overlap}$ in the two images and calculating the total number $N_{total}$ of tissue pixels in both images combined;

   whereby the step (30) of calculating the first quality metric comprises calculating the IoU as $N_{overlap}$ divided by $N_{total}$.

3. Method of claim 2, wherein the value calculated for the IoU is compared against an IoU-threshold, and wherein the method comprising a further step of:

   • setting the IoU-threshold based on a polynomial function, which is dependent on an area of tissue, whereby the tissue area is obtained from the number of tissue pixels identified in the first image.

4. Method of any preceding claim, wherein the step of calculating the second quality metric (40) comprises decomposing the transformation matrix into a 1st matrix representing rotation and a 2nd matrix representing skewness and scaling, and wherein the parameter calculated for the second quality metric is the condition number of the 2nd matrix.

5. Method of claim 4 comprising a further step (70) of calculating a third metric of quality for the image registration process, whereby:

> • the third quality metric is a parameter indicative of the symmetric scaling of the 2nd matrix;
> • the step (70) comprises calculating the 2-norm of the 2nd matrix, under the assumption that skewness is negligible; and
> • it is determined that the quality of the image registration process is unsatisfactory if the value calculated for the 2-norm does not lie within predefined lower and upper threshold limits.

6. Method of any preceding claim, comprising a further step (80) of calculating a fourth quality metric for the image registration process, wherein the fourth metric is a quantitative uncertainty parameter that provides a measure for the spatial accuracy of image alignment in the registration process (20).

7. Method of claim 6, comprising further steps of:

> • annotating a boundary of a region of interest (ROI) to be dissected on the first image; and
> • transferring the ROI annotation onto the second image using the transformation matrix ($A_{total}$) calculated in the sub-step (23) of image registration,
> whereby coordinates of the transferred ROI annotation are used to control a dissection tool (120) in an automated dissection process and wherein:
> • the value calculated for the uncertainty parameter is compared against a threshold that is derived from a typical accuracy of the dissection tool used in the automated dissection process, and wherein it is determined that quality of the image registration is unsatisfactory if the uncertainty parameter exceeds the threshold.

8. Method of claim 6 or 7, dependent on claim 2, further comprising determining an average diameter of a tissue object detected during the sub-step of identifying tissue pixels in the second image, and wherein the step (80) of calculating the quantitative uncertainty parameter comprises multiplying the value calculated for the IoU by the determined average diameter.

9. Method of claim 6 or 7, wherein the step of image registration (20) comprises detecting (21) feature pairs in the first and second images and calculating (22) an individual transformation matrix ($A_{match}$) for each corresponding feature pair, and wherein calculating (80) the uncertainty parameter comprises:

> • identifying a key-point (x) of each feature in the first image (305) that has been detected and matched to a corresponding feature in the second image (310);
> • transforming each identified key point (x) using the transformation matrix calculated for the image registration process ($A_{total}$) and using the individual transformation matrix ($A_{match}$) associated with that feature and
> • determining (81) a local spatial difference D between the two transformations, based on:

$$D = |(A_{total} - A_{match})x|.$$

10. Method of claim 9, wherein the uncertainty parameter is calculated based on an average of the determined local spatial differences.

11. Method of claim 9, comprising further steps of:

> • mapping each calculated spatial difference D onto the second image, and
> • relating each difference D to points of the ROI annotation on the first image (305), to calculate a local value for the uncertainty parameter for all points of the annotation.

12. Method of any of claims 6 - 11, comprising further steps of:

> • assigning a quality score to the value calculated for each quality metric; and
> • calculating an overall quality rating for the image registration process, based on each assigned quality score.

13. A quality control system (90) for an image registration process, the system comprising an imaging module (150) having an image sensor (155) and a processor (153) programmed with an image registration algorithm and image processing software, and a display (145), wherein the processor (153) is further programmed with instructions which cause the system to execute the steps of the method according to any preceding claim.

14. Apparatus for automated dissection comprising the quality control system (90) of claim 13, the apparatus (100) further comprising a moveable dissection tool (110) and a controller (140) for controlling movements of the tool based on coordinates received from the imaging module (150), wherein the received coordinates are indicative of an annotated boundary of a region of interest (ROI) that has been transferred from the first image (305) of reference slide (1) to the second image (310) of a dissection slide (130)

15. Apparatus of claim 14, wherein the processor (153) is programmed to execute the method of claim 12 and is further programmed to assess a quality of the achieved dissection result, by comparing a post based on the overall quality rating calculated for the image registration process.

Fig. 1

Fig. 3a

Fig. 3b

Fig. 3c

Fig. 2

20

Detect and match corresponding feature pairs in the reference image and dissection image ⟶ 21

Calculate transformation matrix $A_{match}$ for each matched feature pair ⟶ 22

Calculate transformation matrix $A_{total}$ for image registration as a whole ⟶ 23

Fig. 4

30-70

3rd metric satisfied?

N        Y

80

Calculate local spatial difference D between a point x of each feature transformed using $A_{match}$ and $A_{total}$ ⟶ 81

Calculate 4th quality metric based on average of calculated differences ⟶ 82

Compare 4th quality metric against threshold ⟶ 83

Report that image registration quality is insufficient

N        4th metric satisfied?

60

150

153        155

90

145

95

Fig. 5

Fig. 6

Europäisches
Patentamt

European
Patent Office

Office européen
des brevets

# EUROPEAN SEARCH REPORT

Application Number

EP 23 18 9527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2021/001564 A1 (XYALL B V [NL]) 7 January 2021 (2021-01-07) | 1,14,15 | INV. G06T7/00 |
| Y | * abstract * | 2,3,6,7, | G06T7/30 |
| | * figures 1-4 * | 9,10,12 | |
| A | * page 1 – page 2 * | 4,5,8,11 | |
| | * page 5, line 33 – page 8, line 13 * | | |
| | * page 12, line 25 – page 13, line 19 * | | |
| | * page 16, line 1 – line 14 * | | |
| | * page 17, line 31 – line 36 * | | |
| | ----- | | |
| A | GB 2 536 274 A (MIRADA MEDICAL LTD [GB]) 14 September 2016 (2016-09-14) | 1-15 | |
| | * page 2, line 15 – page 5, line 4 * | | |
| | * page 10, line 20 – page 11, line 38 * | | |
| | * page 12, line 36 – page 13, line 11 * | | |
| | * page 17, line 10 – page 18, line 2 * | | |
| | ----- | | |
| Y | US 2022/398735 A1 (ROSENBLUM JARED [US] ET AL) 15 December 2022 (2022-12-15) | 2,3 | |
| | * paragraph [0071] – paragraph [0072] * | | TECHNICAL FIELDS SEARCHED (IPC) |
| | * paragraph [0074] – paragraph [0075] * | | |
| | ----- | | G06T |
| Y | ROHLFING T: "Image Similarity and Tissue Overlaps as Surrogates for Image Registration Accuracy: Widely Used but Unreliable", IEEE TRANSACTIONS ON MEDICAL IMAGING, IEEE, USA, vol. 31, no. 2, 1 February 2012 (2012-02-01), pages 153-163, XP011491012, ISSN: 0278-0062, DOI: 10.1109/TMI.2011.2163944 * abstract * * Section III.B * | 2,3 | |
| | ----- | | |
| | -/-- | | |

The present search report has been drawn up for all claims

| Place of search | Date of completion of the search | Examiner |
|---|---|---|
| Munich | 19 January 2024 | Salvador, Elena |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................
& : member of the same patent family, corresponding
document

EPO FORM 1503 03.82 (P04C01)

Europäisches
Patentamt

European
Patent Office

Office européen
des brevets

# EUROPEAN SEARCH REPORT

**Application Number**

**EP 23 18 9527**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZIAD H SALEH ET AL:  "The distance discordance metric-a novel approach to quantifying spatial uncertainties in intra- and inter-patient deformable image registra", PHYSICS IN MEDICINE AND BIOLOGY, INSTITUTE OF PHYSICS PUBLISHING, BRISTOL GB, vol. 59, no. 3, 20 January 2014 (2014-01-20), pages 733-746, XP020256785, ISSN: 0031-9155, DOI: 10.1088/0031-9155/59/3/733 [retrieved on 2014-01-20] * abstract * * Section 2.2; figure 1 * | 6,7,9, 10,12 | |

|  |  |  | TECHNICAL FIELDS SEARCHED      (IPC) |
|---|---|---|---|

The present search report has been drawn up for all claims

| Place of search | Date of completion of the search | Examiner |
|---|---|---|
| Munich | 19 January 2024 | Salvador, Elena |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 18 9527

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2024

| Patent document cited in search report | | | Publication date | Patent family member(s) | | | Publication date |
|---|---|---|---|---|---|---|---|
| WO 2021001564 | A1 | | 07-01-2021 | CN | 114080624 | A | 22-02-2022 |
| | | | | EP | 3761032 | A1 | 06-01-2021 |
| | | | | EP | 3994466 | A1 | 11-05-2022 |
| | | | | JP | 2022538191 | A | 31-08-2022 |
| | | | | US | 2022375070 | A1 | 24-11-2022 |
| | | | | WO | 2021001564 | A1 | 07-01-2021 |
| GB 2536274 | A | | 14-09-2016 | EP | 3268931 | A1 | 17-01-2018 |
| | | | | GB | 2536274 | A | 14-09-2016 |
| | | | | US | 2018247412 | A1 | 30-08-2018 |
| | | | | WO | 2016142166 | A1 | 15-09-2016 |
| US 2022398735 | A1 | | 15-12-2022 | US | 2022398735 | A1 | 15-12-2022 |
| | | | | WO | 2022261525 | A1 | 15-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021001564 A
- WO 2022063695 A
- US 10876933 B
- US 89229294 B